# EUROPEAN PATENT APPLICATION

(11) **EP 4 641 323 A1**
(43) Date of publication of application: **29.10.2025**
(21) Application number: 24171846.9
(22) Date of filing: 23.04.2024
(51) Int. Cl.: G05B 19/042, G06N 20/00

(54) **COMPUTER-IMPLEMENTED METHOD FOR AN AUTOMATED CONFIGURATION OF A CONTROL SYSTEM**

(71) Applicant: ABB SCHWEIZ AG, 5400 Baden (CH)
(72) Inventor: TAN, Ruomu, 68163 Mannheim (DE); MACZEY, Sylvia, 69493 Hirschberg (DE); RODRIGUEZ, Pablo, 69488 Birkenau (DE)
(74) Representative: Maiwald GmbH

(57) **Abstract**

The present invention relates to a computer-implemented method (100) for for an automated configuration of a control system (200), comprising:
- Collecting (102), by a document-type identifier module (50), first information (10) from at least a document database (60), wherein the collecting involves the step of detecting (103) a document type information (61) of at least one document (62) found in the at least one document database (60) and if, the identified document type information (61) of the at least one document (62) fulfils a certain quality parameter (63), suggesting the first information (10) to be extracted from the at least one document (62) with that identified document type information (61);
- Extracting (104), by an extraction module (52), the suggested first information (10) from the at least one document (62) with the identified document type information (61) to obtain second information (12);
- Generating (106), by a plant section module (54), at least one plant section (310) of a plant system (300) on basis of the second information (12);
- Generating (108) a configuration information (14), by a configuration module (55), for at least one control agent (220) of the control system (200) for the automated control of the at least one plant section (310) of the plant system (300).

## Description

### FIELD OF THE INVENTION

The present invention relates to a computer-implemented method for an automated configuration of a control system.

### BACKGROUND OF THE INVENTION

The engineering and configuration of an automation system, e.g. a process plant or industrial system, is usually a time-consuming task since the necessary information is usually spread over several documents. Even an experienced engineer must collect the documents and extract the information manually. However, for unexperienced engineers the effort is still a lot higher, since they still need to find out which information to find in which document. Once the information is collected it has to be transferred into a control system architecture consisting of control agents that are well configured to automate or to control the process plant.

However, this part of the task is error-prone since it easily happens that some values are not transferred to the automation system correctly. In any case the configuration of an automation system nowadays still requires human intervention. As the automation domain is aiming at more autonomy for several safety or efficiency related reasons the reconfiguration of an automation system that might become necessary while the system is running should not be dependent on human interaction. There a system is required that enables the automatic configuration of a control system.

There is a need to address these issues.

### SUMMARY OF THE INVENTION

Therefore, it would be advantageous to provide an improved concept for an automated generation of configuration data for a control system to control a plant system in an efficient, secure and automated manner.

The object of the present invention is solved by the subject matter of the independent claims, wherein further embodiments are incorporated in the dependent claims.

In a first aspect of the present invention, there is provided computer-implemented method for an automated configuration of a control system, comprising the following steps:
- Collecting, by a document-type identifier module, first information from at least a document database, wherein the collecting involves the step of detecting a document type information of at least one document found in the at least one document database and if, the identified document type information of the at least one document fulfils a certain quality parameter, suggesting the first information to be extracted from the at least one document with that identified document type information;
- Extracting, by an extraction module, the suggested first information from the at least one document with the identified document type information to obtain second information;
- Generating, by a plant section module, at least one plant section of a plant system on basis of the second information;
- Generating a configuration information, by a configuration module, for at least one control agent of the control system for the automated control of the at least one plant section of the plant system.

In other words, an important aspect of the present invention is the automatic generation of structured configuration data or configuration information for a control system based on available documentation of the process plant to be controlled by the control system.

This documentation includes various document types such as P&ID diagrams, HMI diagrams, Control narratives, functional descriptions, IO Lists, etc. which may depend on the specific application scenario of the system to be controlled.

Based on these documents, according to the present invention, the plant system is splitted into sections and the control system configures at least one control agent per section. The configuration file of the control agent includes input and output variables as well as control limits, disturbance signals, rewards, objectives, and others.

A further important aspect of the present invention is that a common information model, e.g. an AI model such as an LLM (Large Language Model), is used to extract the information that is necessary to configure and run the automation control system that autonomously controls the plant system.

To achieve this, a pretrained AI model gets access to process plant documentation such as P&ID and HMI diagrams, Control narratives, functional descriptions, IO Lists, Naming Conventions, Equipment specifications, etc. The AI model uses the information found in these documents to divide the plant into sections with minimal interactions. This information can e.g. be retrieved from HMI diagrams or P&ID diagrams. Naming conventions like the KKS (Kraftwerk-Kennzeichen-System) can also be used for identifying plant sections. For each of the identified plant sections at least one control agent needs to be configured for controlling the plant section. The control agent in this case corresponds to a piece of control software, e.g., an APC controller. The information includes the input and output variables, the controlled variables, the targets and the control limits. Further information to be delivered by the AI model could be a list of typical disturbance signals and failure modes for a given process.

In a further aspect of the present invention, one or more AI models are pre-trained to extract the expected outcome from the documentation by using specifically constructed prompts, by a prompt constructor module, that are provided by a prompt constructor module. The present invention can be applied to both greenfield applications, i.e., to configure the control system of newly-started processes, and brownfield applications, namely to configure or update the control agents for an existing process. The system also allows reconfiguration triggered by human experts or automatically.

According to the present invention, the automatically generated configuration information is used to set up an automation system for a new plant, but it may also be applied to reconfigure automation systems that are already deployed. In a further aspect of the present invention, the invented system and method may either be triggered by a human who wants to be supported in configuring an automation system or may be called by another software system.

The present invention provides an efficient solution for an automated plant sectioning based on plant and process documentation. For this, an automated configuration of plant section controlling agents based on plant and process documentation is generated. A configuration in the context this invention means a specification of input and output variables, control limits, disturbance signals, etc.

Further, according to the present invention, prompts are generated automatically that trigger an AI model to find information in specific document types and format the findings in a usable manner.

The present invention provides the following advantages, but is not limited to these:
- Reduced effort in control system configuration.
- Reduction of human errors when configuration a control system and controlling a process plant.
- Increased productivity of control engineers.
- Enabler for future agent-based, autonomous control solutions.
- Adaptive and automated (re-)configuration of the control agents for controlling the plant system.

According to an example, in the step of collecting the first information, at least a pretrained common information model is used that performs a search process to obtain the first information. In this way, the collecting of first information is performed in an efficient and automated manner.

According to an example, the common information model is pretrained by using at least one of the following training information as training data: information from a similar plant, general information in process automation. In this way, the common information model can be configured and trained depending on various application scenarios, so it can be used easily for different applications.

According to an example, the common information model obtains, by a prompt constructor module, document-type specific information or at least an instruction to enable the common information model to identify a specific document type information and / or an output information about an expected outcome of a certain document type of the at least one document. In this way, the common information model is trained in an efficient manner to obtain the desired output of the common information model.

According to an example, the document-type specific information, provided by the prompt constructor module, comprises at least one of the following: user-related input information, pre-defined template information, checklist-related information. In this way, the training of the common information model is enriched by various data improving the output of the common information model.

According to an example, the step of collecting the first information involves obtaining additional information that is at least from one of the following: prior knowledge, technical expert information. In this way, application-dependent information is used to improve the result of the extracting of the first information.

According to an example, the document type information includes at least one of the following: a list of controlled variables, control limit of the variables, reward / target value of operation, typical operating conditions and known fault scenarios, P & ID diagram (= piping and instrumentation diagram) to identify each plant section of the plant system. In this way, the document type information is enriched resulting in more detailed data basis for generating the configuration information.

According to an example, the configuration information for the at least one control agent includes at least one of the following: control objectives, operating constraints for the plant section, control variables that determine operation of the plant system. In this way, an efficient control of the plant system in enabled.

According to an example, the generated configuration information is checked and validated, by a validation module, in a step of validation, to obtain a validation information, wherein the validation information of the validation process is provided to the configuration module according to a feedback loop, so that the configuration information is updated. In this way, the configuration information can be efficiently adapted on changing technical premises and requirements of the to be controlled plant system.

According to an example, new input information in the document database is used to improve the pre-trained common information model. In this way, the common information model is enriched, so to improve its output results continuously.

In a second aspect of the present invention, a control system that is configured to execute the method according any of the previous examples and / or according to the first aspect for an automated configuration of a control system is provided.

In a third aspect of the present invention, a computer comprising a processor configured to perform the method according to the first aspect and / or according to any of the previous examples is provided.

In a fourth aspect of the present invention, a computer program product comprising instructions which, when the computer program is executed by a processor of a computer, causes the computer to perform the method of the first aspect and / or of any of the previous examples.

In a fifth aspect of the present invention, a machine-readable data medium and / or download product is provided containing the computer program according to the fourth aspect.

### BRIEF DESCRIPTION OF THE DRAWINGS

Exemplary embodiments will be described in the following with reference to the following drawings:
Fig. 1 illustrates a schematic flow-diagram of a method of the present invention according to an embodiment of the present invention;
Fig. 2 illustrates a schematic flow-diagram of a method of the present invention according to an embodiment of the present invention; and
Fig. 3 illustrates a schematic workflow-diagram of the Document-type Identifier module according to an embodiment of the present invention.

### DETAILED DESCRIPTION OF THE DRAWINGS

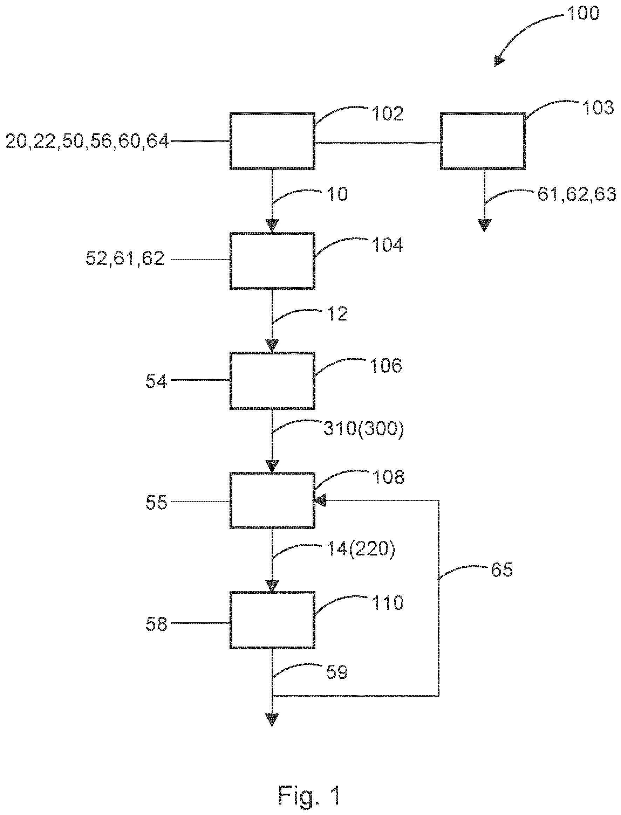

Fig. 1 illustrates a schematic flow-diagram of a method 100 of the present invention according to an embodiment of the present invention.

In a first step 102, collecting, by a document-type identifier module 50, first information 10 from at least a document database 60 is performed. The step of the collecting involves the step 103 of detecting a document type information 61 of at least one document 62 found in the at least one document database 60 and if, the identified document type information 61 of the at least one document 62 fulfils a certain quality parameter 63, suggesting the first information 10 to be extracted from the at least one document 62 with that identified document type information 61.

Optionally, the document type information 61 includes at least one of the following: a list of controlled variables, control limit of the variables, reward / target value of operation, typical operating conditions and known fault scenarios, P & ID diagram (= piping and instrumentation diagram) to identify each plant section 310, 320 of the plant system 300.

Optionally, in the step of collecting 102 the first information 10, at least a pretrained common information model 20, e.g. an Al model, is used that performs a search process to obtain the first information 10.

Optionally, the common information model 20 is pretrained by using at least one of the following training information 22 as training data: information from a similar plant, general information in process automation. Further the pre-trained common information model (20) may be improved by new input information 23 added to the document database 60.

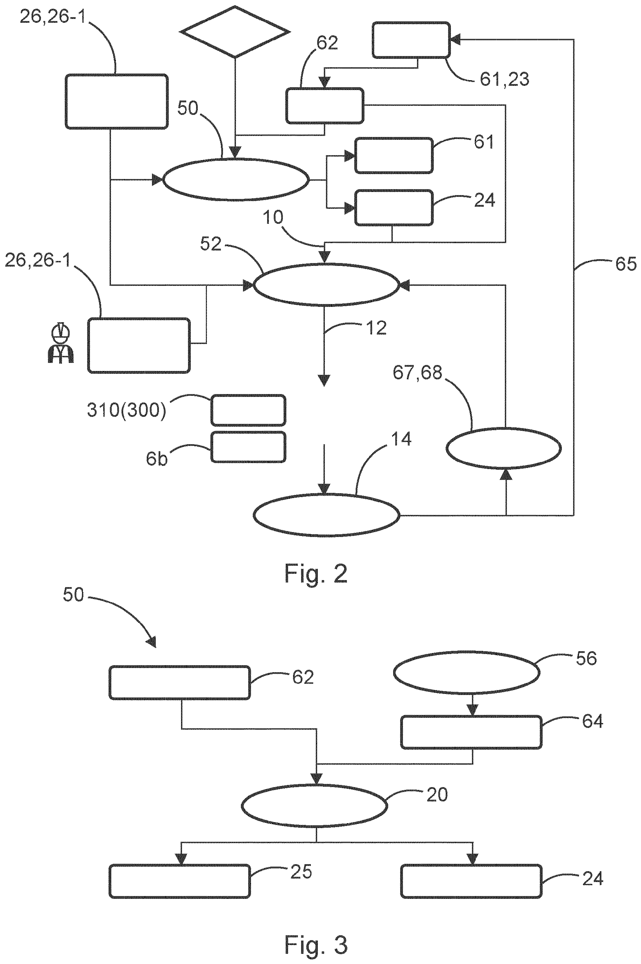

Optionally, the common information model 20 obtains - referring also to Fig. 3 - by a prompt constructor module 56, document-type specific information 64 or at least an instruction to enable the common information model 20 to identify a specific document type information 25 and / or an output information 24 about an expected outcome of a certain document type of the at least one document 62. Optionally, the document-type specific information 64, provided by the prompt constructor module 56, comprises at least one of the following: user-related input information, pre-defined template information, checklist-related information.

Optionally, the step 102 of collecting the first information 10 involves obtaining additional information 26 - referring to Fig. 2 herein - that is at least from one of the following: prior knowledge 26-1, technical expert information 26-2 (cf. Fig. 2).

In a second step 104, extracting, by an extraction module 52, the suggested first information 10 from the at least one document (62) with the identified document type information 61 to obtain second information 12 is performed.

In a third step 106, generating, by a plant section module 54, of at least one plant section 310 of a plant system 300 on basis of the second information 12 is performed. In a fourth step 108, generating a configuration information 14, by a configuration module 55, for at least one control agent 220 of the control system 200 for the automated control of the at least one plant section 310 of the plant system 300 is performed.

In a fourth step 108, generating a configuration information 14, by a configuration module 55, for at least one control agent 220 of the control system 200 for the automated control of the at least one plant section 310 of the plant system 300 is performed.

Optionally, the configuration information 14 for the at least one control agent 220 includes at least one of the following: control objectives, operating constraints for the plant section, control variables that determine operation of the plant system 300.

Optionally, the generated configuration information 14 is checked and validated, by a validation module 58, in a step 110 of validation, to obtain a validation information 59, wherein the validation information 59 of the validation process is provided to the configuration module 55 in a feedback-like manner, e.g. in a feedback-loop 65, so that the configuration information 14 is updated (cf. Fig. 2).

Fig. 2 illustrates a schematic workflow-diagram of a method 100 of the present invention according to an embodiment of the present invention. In the following the invention is detailed by providing further aspects of a possible implementation of the present invention.

In order to obtain the relevant second information 12 by extracting suggested first information 10 from a document database 60, one or more pretrained Al models 20 are used that can access to plant and process documentation 62.

The AI model queries the process documents of the documentation 62 and generates the configuration information or configuration files 14, the plant sections 310 and the control agents 220 responsible for plant sections 310 of the plant system 300.

A prompt constructor 56 delivers prompts, document-typ specific information or simple instructions 64 that enable the common information model 20 to identify a specific document type information 25 and / or an output information 24 about an expected outcome of a certain document type of the at least one document 62 (cf. Fig. 2 and 3).

The prompts are needed to generate a control system architecture for a control system 200 consisting of several control agents 220 that control individual sections 310 of a plant system or an engineering system 300 by individual agent configuration 66 (cf. Fig. 2).

Typical documents to be used by the AI model 20 are P&ID and HMI diagrams, Control narratives, IO Lists, Naming Conventions, Equipment specifications, etc. The AI model 20 may also be enriched with general knowledge in process automation 26-1 and also pretrained using the information from similar plants in the past or by inputs from technical domain experts 26-2 (Fig. 2).

Techniques like one-shot / few-shot prompting, where the prompts to the AI model 20 also contain information about the expected outcome 24 of each document type, can be used to acquire desired outputs from the AI models 20 (cf. Fig. 2).

The prompts that are necessary for generating the desired output are generated by the prompt constructor module 56 automatically that trigger the AI model 20 to find corresponding document information necessary to build a control system architecture of a control system 200 and/or by generating plant sections 310 of the plant system 300 that are controlled by individual control agents 220 with the configuration information or a corresponding configuration file 14 (Fig. 2 and 3). The prompt constructor module 56 is able to generate specialized prompts that incorporate special requirements: These may, e.g., be derived from the cause of a reconfiguration of the control system 200.

The proposed method and system can be triggered:
- by a human for fast set-up of the control system 200. The human might either use queries generated by the prompt constructor module 56, modify them if needed, or generate their own queries.
- by a software component that automatically configures the automation control system.

The present invention can be used either before the process plant is started up or during runtime of the (process) plant system 300. The later may be the case when, e.g., the topology of the plant changes or when the current configuration turns out to be suboptimal, e.g., because of frequent violations of control limits or an unsatisfactory production performance. In this case a software component watching over the plant KPls may trigger the reconfiguration.

The generated configuration files 14 can be added by a feedback-loop 65 to the documentation database 60 to further enhance the pre-trained AI models 20 for future usage.

Referring now to Fig. 2 again, the workflow of the proposed solution starts, first, with identification of various types of documents 61 in the process document data base 60. The Doc Type Identifier module 50 goes through the documents 62 in the database 60 to detect the document type information 61 of each document 62 and suggest the first information 10 to be extracted from the documents (= second information 12).

Then, second, the expected information 24 (cf. Fig. 3), together with the prior knowledge 26-1, further information 26-2, and the document (or snippet of the document) are passed over to the Formatted Information Extraction Module 52 to extract information 12 that will be used directly to configure control agents 220, including the plant sections 310, the list of controlled / manipulated / measured variables, the control limits of the variables and the reward / target of operation.

Other types of information, such as typical operating conditions and known fault scenarios, may also be extracted and can be used when configuring the agents too. For example, multiple control agents 220 with different operating targets can be configured according to the different operating scenarios. One control agent 220 can be configured in order to optimize the production rate of a certain plant section 310; the other control agent can be configured in order to ensure that the operation is within the safety boundary.

The extracted second information 12 can also be validated by using Output Validation Module 58 by referring to various types of information, such as prior knowledge of similar processes, first principles knowledge, and historical information of the target process. For example, the control limits of process variables can be validated against the variables in the same unit from similar processes such that the control limits are not extreme. Only the validated output will be used for configuration of the control agents 220. Then a checklist for the required information for the control agents 220 is applied to check the completeness of the extracted information 12 before using the information for configuring the control agents 220. In case specific information is missing, a Dedicated Query Module by dedicate queries 67 (cf. Fig. 2) creates more specific prompts to query the required information or clarify that the required information is not available. The confirmed configuration will be recorded by the document database 60 for future reference when updating the control agent configuration or when configuring control agents for other processes.

After the initial configuration of the control agents 220, the workflow in Fig. 2 can be triggered again to generate new information for the configuration and / or reconfiguration of the control agents:
- When there are new process documents added to the document database 60, the documents will be automatically used to retrain or fine tune the pre-trained AI model 20; the workflow will also be triggered for the new documents to identify if there will be additional information to be included and if any agent needs to be updated and how.
- When the current performance of the control agents 220 is no longer satisfactory, the reconfiguration can be triggered automatically, e.g., by an orchestrator that monitors the performance of the control agents 220.
- The workflow can also be triggered by human users, e.g., if the current performance of the control agents 220 is no longer satisfying and a reconfiguration with new preference should be triggered.
- It is part of the invention to establish a configuration database (not shown in the figures 1 to 3) of previously managed plants. In such a configuration database the configuration from identified plant sections is stored, containing among others the functional description of the section, design and operational specifications, definition of the (input and output) control signals, control loops, alarms, interlocks, process topology.

By comparing the configuration results generated by similar plants it is possible to detect if one or more process areas are missing from the available documentation. For instance, when processing the available documentation from a power plant, it could be easily detected that that the information (totally or partially) about the condensation unit is not available. This can be done by comparing the sections from other power plants available in the configuration database. Furthermore, making use of the Dedicated Query Module 68 it could suggest solutions that already worked in other similar plants.

In this context and as a further example according to the present invention, when certain information, for example, the objective of a certain control agent, is missing in the configuration file, by using the feedback loop 65, the missing information will be detected and the system is instructed to generate the missing information.

The ability to compare and combine the information contained within the available documents for an existing plant together with the information and configurations from proven solutions in the configuration database makes possible to check for completeness and incrementally improve the final configuration outcome for a specific plant.

In summary, the following aspects are relevant for the present invention:
- The proposed solution offers automated plant sectioning based on plant and process documentation.
- The proposed solution further offers automated configuration of plant section controlling agents based on plant and process documentation. Configuration in this case means the specification of input and output variables, control limits, disturbance signals, etc.
- The Prompt Constructor module 56 automatically generates prompts that trigger an AI model to find information in specific document types and format the findings in a proper way

Fig. 3 illustrates a schematic workflow-diagram of the Document-type Identifier module 50 according to an embodiment of the present invention. The prompt constructor module 56 constructs the prompt or document-type specific information 64 that queries the type of a certain process document. The found document is given to a pre-trained AI model 20, e.g., a Large Language Model, together with the prompt. The AI model 20 then provides the type of the process document to identify a specific document type information 25 of the document 62 and the expected output information 24 that can be extracted from the document 62. One document can have more than one type of information. For example, the P&ID diagram of the process may contain both the tag names and the connectivity of the process units; the control narratives may contain the controlled variables and their limits. Both the document type information 25 and the expected output information 24 will be used, in addition to the process document 62 itself, by the (Formatted information) Extraction module 52 module to extract formatted information form the document 62.

The workflow of the Formatted Information Extraction module 52 can be described as following: The prompt 64 is constructed by combining the example(s) of question / answers, doc snippets that are relevant for the certain question, the inputs of domain experts 26-2 and the expected format of the output 24. The prompt 64 is then given to Al model 20, such as a pre-trained Large Language Model, that is able to follow the example(s) and generate outputs in the expected format according to the doc snippet(s). The output is then validated, by a validation module 58 and added via a feedback information flow 59 to the document database 60 for the configuration of the control agents 220.

### Reference signs

- 10: First information
- 12: Second information
- 14: Configuration information / Configuration file
- 20: Common information model
- 22: Training information
- 23: Input information
- 24: Output/Result information
- 25: Specific document type information
- 26: External / additional information
- 26-1: Prior knowledge
- 26-2: Technical expert information
- 28: Checklist information
- 50: Document-type identifier module
- 52: (Formatted information) Extraction module
- 54: Plant section module
- 55: Configuration module
- 56: Prompt constructor module
- 58: Validation module
- 59: Validation information outcome
- 60: (Document) Database
- 61: Document type information
- 62: Document
- 63: Quality parameter
- 64: document-type specific information / instruction
- 65: Feedback loop
- 66: Configuration control agent
- 67: Query
- 68: Query Module

- 100: Computer-implemented method
- 102: Collecting
- 103: Detecting
- 104: Extracting
- 106: Generating
- 108: Generating
- 110: Validation

- 200: Control system
- 220: Control agent
- 300: Plant system/Engineering system
- 310: Plant section

## Claims

1. Computer-implemented method (100) for an automated configuration of a control system (200), comprising:
- Collecting (102), by a document-type identifier module (50), first information (10) from at least a document database (60), wherein the collecting involves the step of detecting (103) a document type information (61) of at least one document (62) found in the at least one document database (60) and if, the identified document type information (61) of the at least one document (62) fulfils a certain quality parameter (63), suggesting the first information (10) to be extracted from the at least one document (62) with that identified document type information (61);
- Extracting (104), by an extraction module (52 ), the suggested first information (10) from the at least one document (62) with the identified document type information (61) to obtain second information (12);
- Generating (106), by a plant section module (54), at least one plant section (310) of a plant system (300) on basis of the second information (12);
- Generating (108) a configuration information (14), by a configuration module (55), for at least one control agent (220) of the control system (200) for the automated control of the at least one plant section (310) of the plant system (300).

2. Computer-implemented method (100) according to claim 1, wherein in the step of collecting (102) the first information (10), at least a pretrained common information model (20) is used that performs a search process to obtain the first information (10).

3. Computer-implemented method (100) according to claim 2, wherein the common information model (20) is pretrained by using at least one of the following training information (22) as training data: information from a similar plant, general information in process automation.

4. Computer-implemented method (100) according to claim 2, wherein the common information model (20) obtains, by a prompt constructor module (56), document-type specific information (64) or at least an instruction to enable the common information model (20) to identify a specific document type information (25) and / or an output information (24) about an expected outcome of a certain document type of the at least one document (62).

5. Computer-implemented method (100) according to claim 4, wherein the document-type specific information (64), provided by the prompt constructor module (56), comprises at least one of the following: user-related input information, pre-defined template information, checklist-related information.

6. Computer-implemented method (100) according to one of the previous claims, wherein the step (102) of collecting the first information (10) involves obtaining additional information (26) that is at least from one of the following: prior knowledge (26-1), technical expert information (26-2).

7. Computer-implemented method (100) according to one of the previous claims, wherein the document type information (61) includes at least one of the following: a list of controlled variables, control limit of the variables, reward / target value of operation, typical operating conditions and known fault scenarios, P & ID diagram (= piping and instrumentation diagram) to identify each plant section (310, 320) of the plant system (300).

8. Computer-implemented method (100) according to one of the previous claims, wherein the configuration information (14) for the at least one control agent (220) includes at least one of the following: control objectives, operating constraints for the plant section, control variables that determine operation of the plant system (300) .

9. Computer-implemented method (100) according to one of the previous claims, wherein the generated configuration information (14) is checked and validated, by a validation module (58), in a step (110) of validation, to obtain a validation information (59), wherein the validation information (59) of the validation process is provided to the configuration module (55) according to a feedback loop (65), so that the configuration information (14) is updated.

10. Computer-implemented method (100) according to one of the previous claims 2 to 9, wherein new input information (23) in the document database (60) is used to improve the pre-trained common information model (20).

11. Control system (200) configured to execute the method according one of the previous claims for an automated configuration of a control system.

12. A computer comprising a processor configured to perform the method of any preceding claims 1 to 10.

13. A computer program product comprising instructions which, when the computer program is executed by a processor of a computer, causes the computer to perform the method of any of claims 1 to 10.

14. Machine-readable data medium and / or download product containing the computer program according to claim 13.
